# EUROPEAN PATENT APPLICATION

(11) **EP 3 382 667 A1**
(43) Date of publication of application: **03.10.2018**
(21) Application number: 17163747.3
(22) Date of filing: 30.03.2017
(51) Int. Cl.: G08C 17/00, G08C 17/02, H04L 12/413, H04L 12/10

(54) **CONSUMER ELECTRONIC DEVICE AND METHOD**

(71) Applicant: Vestel Elektronik Sanayi ve Ticaret A.S., 45030 Manisa (TR)
(72) Inventor: DÖNER, Çagdas, 45030 Manisa (TR)
(74) Representative: Ascherl, Andreas

(57) **Abstract**

The present invention provides a consumer electronic device (100, 200, 430 - 438) comprising a power supply unit (101, 201) configured to couple the consumer electronic device (100, 200, 430 - 438) to a mains power supply, and a hardened communication unit (102, 202) coupled to the power supply unit (101, 201) and configured to perform a communication with other hardened communication units (102, 202) of other consumer electronic devices. The present invention further provides a method for operating a consumer electronic device (100, 200, 430 - 438).

## Description

### TECHNICAL FIELD

The invention relates to a consumer electronic device and a respective method for operating a consumer electronic device.

### BACKGROUND

Although applicable to any device that is installed in houses or facilities, the present invention will mainly be described in conjunction with consumer electronic devices, like e.g. entertainment devices, white goods or the like.

The possibility to receive information from and transmit information to zones affected by disasters or emergencies is vital for assessing the damages caused and help the affected people.

However, in case of a disaster or emergency the established communication networks tend to break down either because of loss of power supply or because of interrupted signal lines. In addition, in some specific cases, some disaster areas may be inaccessible, like e.g. after a disaster in a nuclear power plant.

Document US2016142893A1 discloses a network that has WiFi routers with solar panel chargers as nodes also called "seeds". Each seed, is distributed by air drop within 30 meters. The seeds utilize the mesh network capabilities, and route devices to the Internet through the few seeds that also have a modem. The modem has a direct connect to the Internet, and supplies Internet to the rest of the seeds. Once connected, the users may press specific buttons on an input unit to respond to questions regarding their situation. The user's answer and GPS coordinates are collected and analyzed. However, the "seeds" have to be deployed after the emergency or disaster already happened.

Accordingly, there is a need for an improved communication system for emergency or disaster situations.

### SUMMARY OF THE INVENTION

The present invention provides a consumer electronic device with the features of claim 1 and a method of operating a consumer electronic device with the features of claim 9.

Therefore it is provided:
A consumer electronic device comprising a power supply unit configured to couple the consumer electronic device to a mains power supply, and a hardened communication unit coupled to the power supply unit and configured to perform a communication with other hardened communication units of other consumer electronic devices.

It is further provided:
A method for operating a consumer electronic device, the method comprising coupling the consumer electronic device to a mains power supply via a power supply unit, and performing a communication with other hardened communication units of other consumer electronic devices with a hardened communication unit of the consumer electronic device coupled to the power supply unit.

The present invention is based on the fact that in case of an emergency or a disaster, like e.g. an earthquake, a major avalanche, a tsunami or the like, public communication may be impaired or may even be impossible. Further, some regions may not be accessible any more, e.g. because of contamination.

The present invention is further based on the finding that consumer electronic devices, e.g. entertainment electronics like TV sets, or white goods like washing machines, are present in almost every household and every facility.

The present invention uses this knowledge and provides consumer electronic devices with integrated hardened communication units, that may communicate with each other.

If consumer electronic devices are provided with the hardened communication units as suggested in the present invention, the hardened communication units may form a network that is separate of any other data network that may e.g. be provided in a house or a facility.

In case of an emergency or a disaster such facility or house networks may become inoperable and data transmission may become impossible. However, since the hardened communication units provide a separate network that may be managed by the hardened communication units alone, this network may substitute any other network and may be used to transmit data from the danger zone or the main impact areas after a disaster or emergency to the outside. It is further not necessary to bring dedicated transmission apparatuses into position after a disaster or emergency happened, since the consumer electronic devices are already installed in houses or facilities.

Therefore, with the present invention information transfer form a disaster zone to the outside becomes possible even if preinstalled networks fail due to the disaster or emergency.

The hardened communication units may comprise different elements, like e.g. power supply devices, controllers, communication devices or the like. The controller may e.g. control the other devices and be a low power optimized controller. The controller may e.g. be a microcontroller with different interfaces, like e.g. I²C, SPI, GPIOs or the like that couple the microcontroller to the other elements and/or sensors.

Further embodiments of the present invention are subject of the further subclaims and of the following description, referring to the drawings.

In an embodiment the hardened communication unit may comprise a rigid housing with a predetermined stability, especially wherein the rigid housing is water proof and/or fire proof.

The consumer electronic devices may be arranged in an area that may directly be affected by a disaster or emergency. For example TV sets, radios, washing machines, microwave ovens, coffee machines or the like may be provided in a plurality of rooms in a factory building or a power plant building. If for example an emergency, like e.g. an explosion occurs in the building, large areas of the building may be affected by the fire.

Consumer electronic devices in an affected area will probably suffer severe damage from the fire. Therefore, providing the hardened communication units with a rigid housing that is water and/or fire proof will allow the hardened communication units to function properly, even if the consumer electronic device in which the respective hardened communication unit is provided is damaged.

In an embodiment the hardened communication unit may comprise an electrical energy storage and a charging controller coupled to the power supply unit and the electrical energy storage, wherein the charging controller may be configured to charge the electrical energy storage with power from the power supply unit while the power supply unit receives electrical power from the mains power supply.

The electrical energy storage allows the hardened communication units to function without any external power supply. Since the consumer electronic devices will usually be installed and used by their owners prior to any disaster or emergency happening, the charging controller will be capable of charging the electrical energy storage prior to any disaster or emergency happening.

Therefore, in case of a disaster or emergency the electrical energy storage will be charged and may provide the electrical energy that is necessary to operate the hardened communication unit of the respective consumer electronic device.

A typical or average energy consumption of the hardened communication units may be determined in advance, e.g. during development or testing of the hardened communication units. The electrical energy storage may then be dimensioned according to a required runtime of the hardened communication units.

In an embodiment the hardened communication unit may comprise an electrical energy harvesting device that is configured to harvest electrical energy from heat and/or solar energy and/or movement and/or wireless signals.

The electrical energy harvesting device may e.g. comprise a Peltier-element, a solar cell or an antenna with the respective harvesting circuitry that will provide electrical energy for the operation of the hardened communication unit. It is understood, that in combination with an electrical energy storage the electrical energy harvesting device may also be used to charge the electrical energy harvesting device if the energy produced by the electrical energy harvesting device is greater than the energy required by the hardened communication unit.

The electrical energy harvesting device will allow to operate the hardened communication unit independently of any other energy supply and may extend the operating time of the hardened communication units especially in case of a breakdown of the mains power supply.

In an embodiment the hardened communication unit may comprise a wireless communication interface that is configured to couple the hardened communication unit with the hardened communication units installed in other consumer electronic devices in a wireless data network.

If the hardened communication units comprise wireless communication interfaces it is easy to couple the hardened communication units that are within reach of each other in a wireless communication network. The wireless data network may be a traditional network, like e.g. an IP based network. Other possible network protocols comprise ZigBee, Bluetooth LE (Low Energy), 6LoWPAN, or any other low power wireless network protocol.

Further the wireless data network may be capable of performing an autonomous start-up and automatically configure the single network elements. The single wireless communication interfaces may e.g. emit beacon signals or discovery messages that provide the information necessary to communicate with the emitting wireless communication interface to other wireless communication interface that may respond to the beacon signals or discovery messages. The protocol of the data transmission may be chosen such that an automatic collision detection or handling is performed in case that more than one wireless communication interface emit such beacon signals or discovery messages at the same time.

In an embodiment the wireless communication interface may be configured to couple the hardened communication unit with the hardened communication units installed in other consumer electronic devices in a self-adaptive data network.

Self-adaptive data networks, also called mesh networks, are networks that are self-organizing and/or self-healing. This means that no central authority is necessary to set up the network and that any number of nodes present at the startup of the network will self-organize the data communication in the network and set-up any necessary schedules or the like. Further, such networks allow dynamic removal or addition of network nodes without any manual intervention or configuration.

Therefore, with the self-adaptive data network a reliable yet flexible infrastructure may be provided.

In an embodiment the hardened communication unit may comprise a power line communication interface that is configured to couple the hardened communication unit with the hardened communication units installed in other consumer electronic devices in a data network via the mains power supply of the consumer electronic device.

The consumer electronic device will normally be connected to a mains power outlet. This wired connection may be used by the power line interface to communicate data to other hardened communication units. During normal operation, i.e. before a disaster or emergency happens, the power line interface may communicate over the power lines that carry the mains voltage of e.g. 110 Volt or 230 Volt. After the disaster or emergency has happened, the power lines may still carry the mains voltage or not. The power line interface may therefore be adapted to communicate over the power lines with or without the mains voltage present.

The wireless communication interface as well as the power line communication interface may pre-establish or configure any parameters of the data communication, i.e. the wireless data network or the wired data network, that may be necessary to perform communication over the respective network in advance, i.e. before any disaster or emergency happens. The wireless communication interface as well as the power line communication interface may e.g. perform such communication during normal operation of the respective consumer electronic device.

In an embodiment the hardened communication unit may comprise at least one sensor of a humidity sensor and a radiation sensor and a chemical sensor and a sound sensor and an imaging sensor.

The hardened communication units can not only provide a data network but may also serve as sensor nodes in the data network. The humidity sensor, the radiation sensor and the chemical sensor may be used to acquire data about the surroundings of the hardened communication units.

The sound and imaging sensors may be used by human beings to communicate via audio and video with other persons. The audio and video sensors may e.g. be sensors of a smart TV with a camera and a microphone or separate sensors that may be provided in any consumer electronic device.

The hardened communication units may also be capable of forwarding data to other external networks. Some of the hardened communication units may therefore be a kind of gateway or external units may be compatible with the network protocol used by the hardened communication units to receive data from the data network of hardened communication units.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a consumer electronic device according to the present invention;
Fig. 2 shows a block diagram of another embodiment of a consumer electronic device according to the present invention;
Fig. 3 shows a flow diagram of an embodiment of a method according to the present invention; and
Fig. 4 shows a block diagram of a network established by embodiments of consumer electronic devices according to the present invention.

In the figures like reference signs denote like elements unless stated otherwise.

### DETAILED DESCRIPTION OF THE DRAWINGS

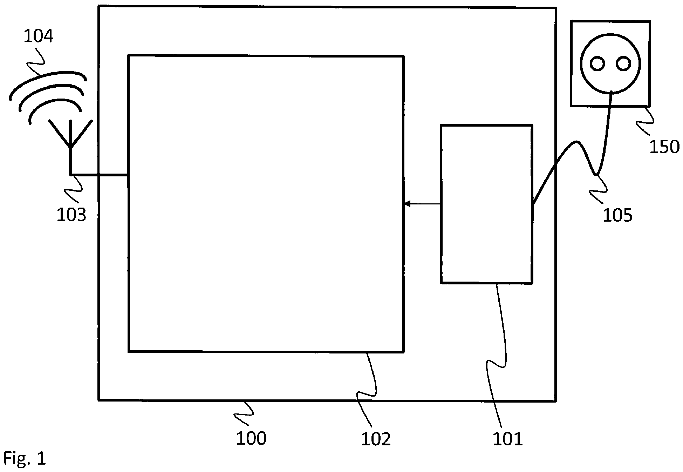

Fig. 1 shows a block diagram of a consumer electronic device 100. The consumer electronic device 100 may be any type of electronic device, like e.g. a TV set, a set-top box, a dish washer, a washing machine, a microwave oven, an electric clock or the like.

The consumer electronic device 100 comprises a power supply unit 101 that is coupled to a mains power outlet 150 via a power cord 105. The power supply unit 101 is further coupled to a hardened communication unit 102. The hardened communication unit 102 comprises an antenna 103 to transmit wireless signals 104.

The hardened communication unit 102 may be supplied by the power supply unit 101 with electrical power from the mains power outlet 150. The housing of the hardened communication unit 102 may be a rigid housing with a predetermined mechanical stability. Further the rigid housing may be water proof and/or fire proof.

The hardened communication unit 102 may be provided in the consumer electronic device 100, to provide a backup communication node for an emergency communication network. The emergency communication network may e.g. be used or needed after an emergency or disaster has happened. For example an area may be affected by an earthquake or a power plant may break down because of an explosion.

In such cases usually the available data networks will break down and become un-functional. However, it is vital to receive detailed information from the zone that is affected by the emergency or disaster.

Therefore, in such cases the backup or emergency communication network formed by a plurality of hardened communication units 102 may be activated.

In a city in almost every house at least one consumer electronic device 100 will be installed. If for example that city is affected by an earthquake, the hardened communication units 102 in the consumer electronic devices 100 may be activated or automatically activate themselves and form a communication network that allows transmitting data into the affected zone or out of the affected zone.

The present invention therefore allows support units, like e.g. firefighters or police, to gather detailed information of an affected zone prior to entering that zone.

The hardened communication units 102 may e.g. comprise some kind of protection mechanism that only allows official personnel, like firefighters or policemen, to activate and use the network provided by the hardened communication units 102.

The single hardened communication units 102 may be capable of forming a wireless data network like e.g. a self-adaptive data network. A self-adaptive data network provides a very flexible infrastructure with self-healing capabilities.

That means that any node, i.e. hardened communication unit 102, may join or leave the self-adaptive data network any time. As soon as a node enters or joins the self-adaptive data network, the node is integrated into the already established network and may participate in the communication. A plurality of self-adaptive data network or mesh network protocols are known. Any one of these protocols may be used with the present invention.

Possible wireless data communication standards may comprise ZigBee, 6LowPAN, Bluetooth LE or any other low power wireless network protocol. Further, some hardened communication unit 102 may be capable of communicating according to different standards and may perform a routing between different segments of the emergency communication network that use different communication standards.

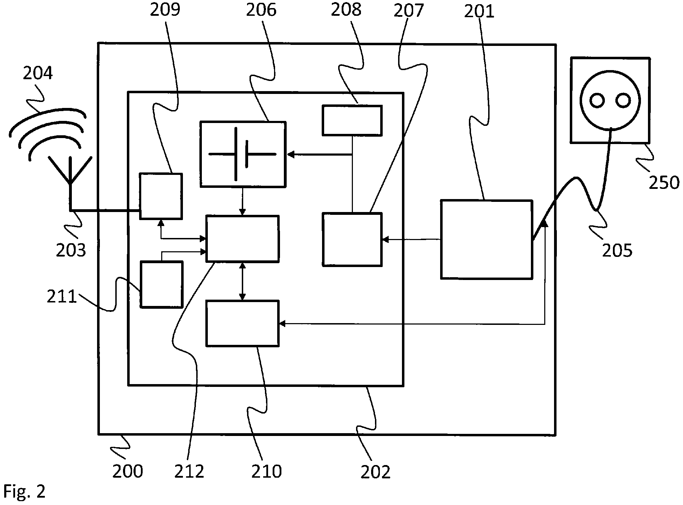

Fig. 2 shows a block diagram of another consumer electronic device 200. The consumer electronic device 200 is based on the consumer electronic device 100 and also comprises a power supply unit 201 and a hardened communication unit 202.

However, the hardened communication unit 202 comprises an electrical energy storage 206 that provides the hardened communication unit 202 with electrical energy when the mains power is not available. The electrical energy storage 206 may be charged via charging controller 207 from the mains outlet 250 as long as the mains power is available. The electrical energy storage 206 may therefore be fully charged when the disaster or emergency happens.

As an optional feature, the hardened communication unit 202 may also comprise an electrical energy harvesting device 208. The electrical energy harvesting device 208 may be any device that is capable of harvesting energy from its surroundings. Such an electrical energy harvesting device 208 may e.g. harvest electrical energy from heat, from movement, from solar energy, from wireless signals or the like. The electrical energy harvesting device 208 may also be provided external to the hardened communication unit 202, e.g. as a manually operated generator.

The hardened communication unit 202 further comprises a processor 212 that performs control of the hardened communication unit 202. The processor 212 may e.g. be a microcontroller unit MCU or any other type of controller, especially a low power controller.

The processor 212 is coupled to a wireless communication interface 209 that is coupled to the antenna 203 and transmits wireless signals 204. The wireless communication interface 209 may be a communication interface for a respective communication standard that is supported by the hardened communication unit 202.

In an embodiment, the wireless communication interface 209 may be integrated into the processor 212.

The hardened communication unit 202 further comprises as an option a power line communication interface 210. The processor 212 may e.g. use the power line communication interface 210 to transmit data of the power lines in a building. The power line communication interface 210 may especially be adapted to communicate over power lines that carry a mains voltage as well as over power lines that do not carry a mains voltage. Depending on the power line communication scheme the same scheme may be used with or without mains voltage. The power line communication interface 210 provides an additional communication means that may be used as an alternative or as an addition to the wireless communication to extend the reach of the emergency communication network.

Finally, the hardened communication unit 202 also comprises a sensor 211. The sensor 211 may be any type of sensor that provides required information. Such a sensor 211 may e.g. be a chemicals sensor, a radiation sensor, a vibration sensor or an accelerometer.

Further, the sensor 211 may also be an imaging or sound sensor and allow the hardened communication unit 202 to provide image and sound data via the emergency communication network outside of the affected zone or area.

If e.g. the consumer electronic device 200 is a smart TV set, the TV set may already comprise a camera and a microphone usually used e.g. for video calls. In an emergency case the camera and the microphone may be used by the hardened communication unit 202 as sensors 211.

It is understood that the hardened communication unit 202 may comprise more than one and any combination of sensors 211.

To further reduce the energy consumption in a network of hardened communication units 202, not all of the hardened communication units 202 may be operational at the same time. If for example an area is covered by more than one hardened communication unit 202 the hardened communication units 202 may coordinate in a timely manner, which hardened communication unit 202 provides the data service to that area. This will allow the hardened communication units 202 to extend the life time of the wireless network in that area.

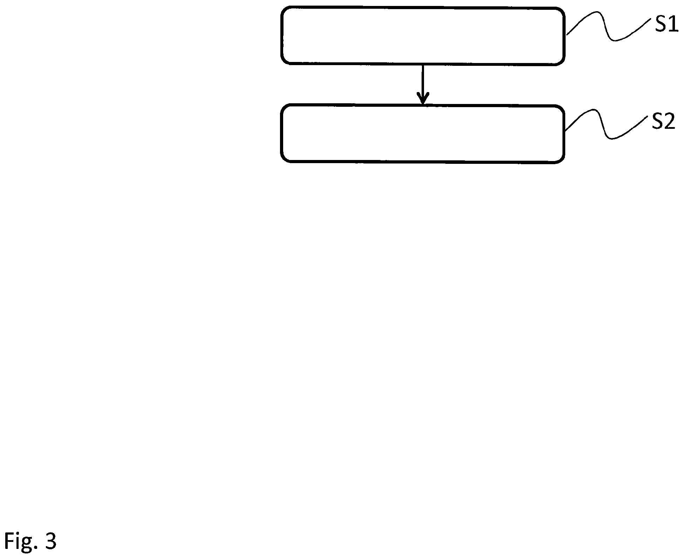

In the description of the method-based Fig. 3 for sake of clarity the reference signs of Figs. 1 and 2 will be maintained.

Fig. 3 shows a flow diagram of a method for operating a consumer electronic device 100, 200.

The method comprises coupling S1 the consumer electronic device 100, 200 to a mains power supply via a power supply unit 101, 201, and performing S2 a communication with other hardened communication units 102, 202 of other consumer electronic devices with a hardened communication unit 102, 202 of the consumer electronic device 100, 200 coupled to the power supply unit 101, 201, especially in case of a disaster or emergency.

The hardened communication unit 102, 202 may be coupled with the hardened communication units 102, 202 installed in other consumer electronic devices in a wireless data network, especially in a self-adaptive data network. In addition or as alternative, the hardened communication unit 102, 202 may be coupled with the hardened communication units 102, 202 installed in other consumer electronic devices in a data network via the mains power supply of the consumer electronic device 100, 200.

The method may further comprise reading and forwarding with the hardened communication unit 102, 202 sensor data of a humidity sensor and a radiation sensor and a chemical sensor and a sound sensor and an imaging sensor.

The method may further comprise protecting the hardened communication unit 102, 202 with a rigid housing with a predetermined stability, especially wherein the rigid housing is water proof and/or fire proof.

To allow uninterrupted operation of the hardened communication unit 102, 202 electrical energy may be stored in an electrical energy storage 206 of the hardened communication unit 102, 202. This electrical energy may be provided by the power supply unit 101, 201 while electrical power is received from the mains power supply.

To extend the operation of the hardened communication unit 102, 202 electrical energy for operating the hardened communication unit 102, 202 may be harvested from heat and/or solar energy and/or movement and/or wireless signals.

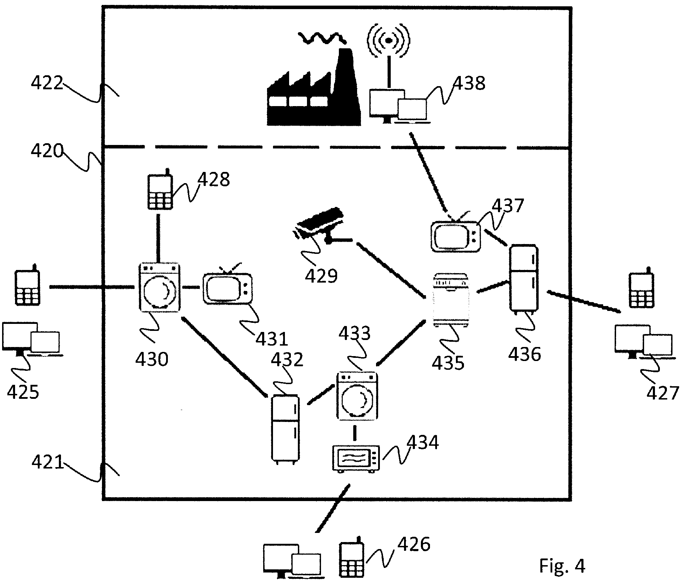

Fig. 4 shows a block diagram of a network established by embodiments of consumer electronic devices 430 - 438 according to the present invention.

Further, clients 425 - 429 are shown in Fig. 4 that use the network provided by the consumer electronic devices 430 - 438. The disaster happened in the disaster zone 420, wherein part 421 of the disaster zone 420 is accessible and part 422 of the disaster zone 420 is inaccessible. The inaccessible zone 422 may e.g. be a power plant where an explosion occurred.

It can be seen that in the network any type of consumer electronic device 430 - 438 like e.g. TV sets, washing machines, refrigerators or the like may be present and provide the necessary infrastructure.

Further, different types of clients 425 - 429 may be present. In Fig. 4 the clients 425, 426, 427 are positioned outside of the disaster zone 420 and may e.g. be computers or smartphones of e.g. firemen or police officers.

Inside of the disaster zone 428 a telephone 428 and a camera 429 may use the network provided by the consumer electronic devices 430 - 438 to transmit voice and image data to the clients 425, 426, 427.

Not explicitly shown but certainly possible are sensors that may e.g. be integrated into the consumer electronic devices 430 - 438 and transport sensor data to the clients 425, 426, 427.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a consumer electronic device 100, 200, 430 - 438 comprising a power supply unit 101, 201 configured to couple the consumer electronic device 100, 200, 430 - 438 to a mains power supply, and a hardened communication unit 102, 202 coupled to the power supply unit 101, 201 and configured to perform a communication with other hardened communication units 102, 202 of other consumer electronic devices. The present invention further provides a method for operating a consumer electronic device 100, 200, 430 - 438.

### List of reference signs

- 100, 200: consumer electronic device
- 101, 201: power supply unit
- 102, 202: hardened communication unit
- 103, 203: antenna
- 104, 204: wireless signals
- 105, 205: power cord

- 206: electrical energy storage
- 207: charging controller
- 208: electrical energy harvesting device
- 209: wireless communication interface
- 210: power line communication interface
- 211: sensor
- 212: processor

- 420: disaster zone
- 421: accessible area
- 422: inaccessible area
- 425 - 429: client
- 430 - 438: consumer electronic device

- 150, 250: mains power supply

## Claims

1. Consumer electronic device (100, 200, 430 - 438) comprising:
a power supply unit (101, 201) configured to couple the consumer electronic device (100, 200, 430 - 438) to a mains power supply, and
a hardened communication unit (102, 202) coupled to the power supply unit (101, 201) and configured to perform a communication with other hardened communication units (102, 202) of other consumer electronic devices.

2. Consumer electronic device (100, 200, 430 - 438) according to claim 1, wherein the hardened communication unit (102, 202) comprises a rigid housing with a predetermined stability, especially wherein the rigid housing is water proof and/or fire proof.

3. Consumer electronic device (100, 200, 430 - 438) according to any one of the preceding claims, wherein the hardened communication unit (102, 202) comprises an electrical energy storage (206) and a charging controller (207) coupled to the power supply unit (101, 201) and the electrical energy storage (206), wherein the charging controller (207) is configured to charge the electrical energy storage (206) with power from the power supply unit (101, 201) while the power supply unit (101, 201) receives electrical power from the mains power supply.

4. Consumer electronic device (100, 200, 430 - 438) according to any one of the preceding claims, wherein the hardened communication unit (102, 202) comprises an electrical energy harvesting device (208) that is configured to harvest electrical energy from heat and/or solar energy and/or movement and/or wireless signals.

5. Consumer electronic device (100, 200, 430 - 438) according to any one of the preceding claims, wherein the hardened communication unit (102, 202) comprises a wireless communication interface (209) that is configured to couple the hardened communication unit (102, 202) with the hardened communication units (102, 202) installed in other consumer electronic devices in a wireless data network.

6. Consumer electronic device (100, 200, 430 - 438) according to claim 5, wherein the wireless communication interface (209) is configured to couple the hardened communication unit (102, 202) with the hardened communication units (102, 202) installed in other consumer electronic devices in a self-adaptive data network.

7. Consumer electronic device (100, 200, 430 - 438) according to any one of the preceding claims, wherein the hardened communication unit (102, 202) comprises a power line communication interface (210) that is configured to couple the hardened communication unit (102, 202) with the hardened communication units (102, 202) installed in other consumer electronic devices in a data network via the mains power supply of the consumer electronic device (100, 200, 430 - 438).

8. Consumer electronic device (100, 200, 430 - 438) according to any one of the preceding claims, wherein the hardened communication unit (102, 202) comprises at least one sensor (211) of a humidity sensor and a radiation sensor and a chemical sensor and a sound sensor and an imaging sensor.

9. Method for operating a consumer electronic device (100, 200, 430 - 438), the method comprising:
coupling (S1) the consumer electronic device (100, 200, 430 - 438) to a mains power supply via a power supply unit (101, 201), and
performing (S2) a communication with other hardened communication units (102, 202) of other consumer electronic devices with a hardened communication unit (102, 202) of the consumer electronic device (100, 200, 430 - 438) coupled to the power supply unit (101, 201).

10. Method according to claim 9, comprising protecting the hardened communication unit (102, 202) with a rigid housing with a predetermined stability, especially wherein the rigid housing is water proof and/or fire proof.

11. Method according to any one of the preceding claims 9 and 10, comprising storing electrical energy in an electrical energy storage (206) of the hardened communication unit (102, 202) with power from the power supply unit (101, 201) while electrical power is received from the mains power supply.

12. Method according to any one of the preceding claims 9 to 11, comprising harvesting electrical energy for operating the hardened communication unit (102, 202) from heat and/or solar energy and/or movement and/or wireless signals.

13. Method according to any one of the preceding claims 9 to 12, comprising coupling the hardened communication unit (102, 202) with the hardened communication units (102, 202) installed in other consumer electronic devices in a wireless data network, especially in a self-adaptive data network.

14. Method according to any one of the preceding claims 9 to 13, comprising coupling the hardened communication unit (102, 202) with the hardened communication units (102, 202) installed in other consumer electronic devices in a data network via the mains power supply of the consumer electronic device (100, 200, 430 - 438).

15. Method according to any one of the preceding claims 9 to 14, comprising reading and forwarding with the hardened communication unit (102, 202) sensor data of a humidity sensor and a radiation sensor and a chemical sensor and a sound sensor and an imaging sensor.
